# FASCICULE DE BREVET EUROPEEN

(11) **EP 1 323 128 B1**
(45) Date de publication et mention de la délivrance du brevet: **07.12.2005**
(21) Numéro de dépôt: 01969869.5
(22) Date de dépôt: 11.09.2001
(51) Int. Cl.: G06K 19/077

(54) **ETIQUETTE ELECTRONIQUE SANS CONTACT POUR PRODUIT A SURFACE CONDUCTRICE**
KONTAKTLOSES ELEKTRONISCHES ETIKETT FÜR PRODUKTE MIT ELEKTRISCH LEITENDER OBERFLÄCHE
CONTACT-FREE ELECTRONIC LABEL FOR PRODUCT WITH CONDUCTIVE SURFACE

(30) Priorité: 22.09.2000 FR 0012092
(43) Date de publication de la demande: 02.07.2003
(73) Titulaire: GEMPLUS, 13881 Gémenos Cedex (FR)
(72) Inventeur: MARTIN, Philippe, F-21200 BEAUNE (FR)
(86) Numéro de dépôt international: PCT/FR2001/002813
(87) Numéro de publication internationale: WO 2002/025583

(56) Documents cités:
- EP-A- 0 704 816
- WO-A-00/21031
- WO-A-98/23971
- DE-A- 19 542 900
- US-A- 5 552 790
- US-A- 5 574 470
- US-A- 6 049 278

## Description

L'invention concerne les étiquettes électroniques sans contact qui sont apposées sur les produits en vue de leur identification et, plus particulièrement, celles qui sont destinées à être apposées sur des produits comportant une surface conductrice.

Il est connu d'identifier les produits par des « codes barre » qui sont imprimés directement sur les produits ou sur des étiquettes collées ensuite sur ces derniers.

Ces codes barre sont lus par un dispositif optique au moment de leur passage à la caisse et leur décodage permet d'adresser un système informatique en vue d'en connaître le prix, de l'afficher sur un écran et de l'additionner à la somme des autres produits présentés au dispositif optique.

Un des inconvénients majeurs des codes barre est qu'ils sont figés au moment de leur impression et ne permettent donc pas un suivi du produit au cours du temps, de la fabrication à la vente et, a fortiori, pendant toute là période de garantie.

Aussi, il a été proposé de remplacer les codes barre par des étiquettes dites électroniques qui comprennent un circuit électronique comportant principalement une mémoire de type électronique pour enregistrer non seulement les informations d'un code barre mais aussi d'autres informations relatives à la « vie » du produit, certaines de ces informations supplémentaires pouvant être modifiées ou mises à jour au cours de cette vie.

Dans des applications plus simples, les étiquettes électroniques servent de dispositif anti-vol en actionnant une alarme lorsque le produit passe dans des portillons sans avoir été préalablement présentés à la caisse pour paiement, le passage à la caisse avec paiement ayant pour effet de désactiver l'alarme.

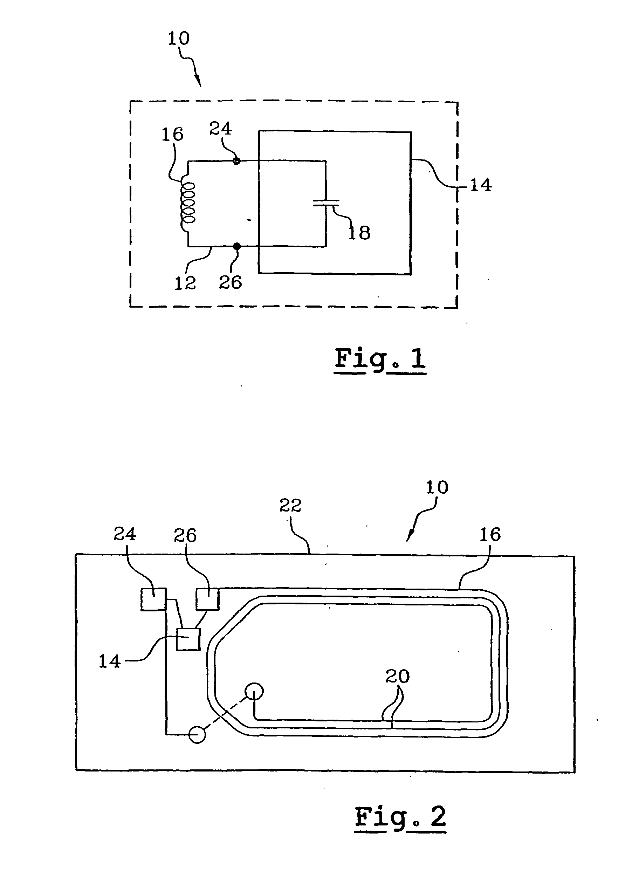

Quelle que soit l'application envisagée, une étiquette électronique 10 à lecture sans contact comprend (figure 1) une antenne 12 associée à un circuit électronique 14 sous forme d'un circuit intégré appelé puce électronique. L'antenne 12 est réalisée par un circuit accordé qui est constitué d'une bobine 16 et d'un condensateur 18, le condensateur faisant partie du circuit électronique 14.

La bobine 16 est formée par quelques spires 20 (figure 2) disposées sur une feuille d'isolant 22, les extrémités 24 et 26 de l'enroulement des spires étant connectées aux bornes du condensateur 18 disposé à l'intérieur du circuit électronique. La puce électronique 14 est collée sur la feuille 22.

Une telle étiquette électronique est lue lors de son passage devant un dispositif de lecture qui émet un rayonnement électromagnétique détecté par l'antenne 12.

Le signal émis par le dispositif de lecture comprend un signal haute fréquence qui est modulé, par exemple en amplitude, par un signal basse fréquence qui véhicule les informations à transmettre, par exemple une instruction de lecture de la mémoire électronique.

Le signal à haute fréquence, par exemple à une fréquence de 13,56 MHz, détecté par l'antenne 12 sert après redressement et filtrage, à alimenter le circuit électronique 14 en énergie électrique tandis que le signal basse fréquence sert, après démodulation et décodage, à reconnaître l'instruction.

L'instruction peut consister à lire la mémoire électronique en vue de transmettre tout ou partie de son contenu au dispositif de lecture par l'intermédiaire de l'antenne 12 qui continue à recevoir un signal haute fréquence non modulé mais dont la charge varie en fonction d'un signal modulé représentatif du contenu de la mémoire lue.

Il en résulte une modulation du couplage magnétique entre l'antenne 12 et l'antenne du dispositif de lecture qui est détectée et décodée par ce dernier.

L'étiquette électronique 10 est solidarisée, par exemple par collage, au produit à identifier ou à son emballage par l'intermédiaire de la feuille isolante 22.

Ce type d'étiquette électronique, dite passive car alimentée par l'énergie du signal haute fréquence, fonctionne parfaitement lorsque le support de l'étiquette électronique n'est pas électriquement conducteur mais son fonctionnement est altéré, voire même impossible, lorsque le support est en un matériau électriquement conducteur car le rayonnement électromagnétique est absorbé par le matériau conducteur du support sous forme de courants de FOUCAULT, de sorte que l'antenne de l'étiquette électronique ne détecte plus aucun signal et n'est évidemment pas alimentée en énergie par le signal haute fréquence.

Dans le cas d'un support conducteur, il a été proposé d'utiliser des étiquettes électroniques dites actives qui sont alimentées en énergie électronique par une pile et qui fonctionnent alors comme émetteurs radiofréquence. De telles étiquettes électroniques, qui sont par exemple utilisées sur les chaînes de fabrication des automobiles, sont volumineuses et d'un coût élevé et ne peuvent donc pas être fixées sur des produits de faible encombrement et/ou d'un prix peu élevé.

Une solution intermédiaire consiste à éloigner l'étiquette électronique de son support conducteur en l'apposant par exemple, sur l'emballage du produit, ce qui présente l'inconvénient de séparer l'étiquette électronique du produit lui-même. C'est par exemple le cas des produits tels que des disques dits « laser », c'est-à-dire à enregistrement et lecture par faisceau laser, ces disquettes présentant une surface conductrice sur un côté.

Le document DE 195 42 900 A1 décrit un support de données comprenant un circuit intégré et une antenne en forme de boucle pour l'échange de données et d'énergie par voie électromagnétique. Ce support comporte également au moins un enroulement conducteur supplémentaire afin d'améliorer la portée de la communication pour une utilisation sur une surface métallique.

Un but de la présente invention est donc de réaliser une étiquette électronique qui peut être solidarisée à un support conducteur. Ce support conducteur peut être, par exemple, la surface conductrice d'un disque laser ou la paroi métallique externe d'une bouteille de gaz ou encore une pièce détachée métallique.

L'invention concerne donc une étiquette électronique sans contact destinée a être solidaire d'une surface conductrice, par l'intermédiaire d'une couche diélectrique isolante, ladite étiquette comprenant d'une part un support électriquement isolant portant un circuit intégré associé à un premier enroulement conducteur d'antenne pour former un premier circuit accordé, et d'autre part un circuit comprenant un deuxième enroulement conducteur de spires ayant deux extrémités, caractérisée en ce que le circuit comporte deux armatures de grande surface disposées aux extrémités du deuxième enroulement, lesdites armatures s'étendant sur le support sans se faire face, d'une largeur nettement supérieure à celle d'une extrémité d'enroulement de telle manière que chaque armature puisse coopérer avec ladite surface conductrice pour former un condensateur accordant le circuit à une fréquence d'accord.

Le support isolant peut comprendre deux supports isolants dont les faces opposées sont solidarisées entre elles, par exemple, par une couche adhésive isolante.

La couche diélectrique isolante en contact avec la surface conductrice est une couche adhésive. Cette couche adhésive est recouverte d'une feuille de protection détachable.

Le circuit accordé comprenant le premier enroulement conducteur d'antenne et le circuit accordé comprenant le deuxième enroulement conducteur ont des fréquences d'accord très voisines.

D'autres caractéristiques et avantages de la présente invention apparaîtront à la lecture de la description suivante d'un exemple particulier de réalisation, ladite description étant faite en relation avec les dessins joints dans lesquels :
- la figure 1 est un schéma fonctionnel d'une étiquette électronique sans contact selon l'art antérieur,
- la figure 2 est une vue de dessus d'une étiquette électronique sans contact selon l'art antérieur,
- la figure 3 est une vue de dessus d'une étiquette électronique sans contact selon l'invention,
- la figure 4 est une vue en section selon la ligne IV-IV de la figure 3, et
- la figure 5 est un schéma montrant la réalisation électrique du circuit accordé en utilisant la surface métallique du produit comme une des armatures du condensateur d'accord.

Les figures 1 et 2 ont été décrites dans le préambule pour définir une étiquette électronique sans contact de l'art antérieur destinée à être solidarisée à un produit dont la paroi externe n'est pas conductrice.

Pour être solidarisée sur une paroi en matériau conducteur, cette étiquette de l'art antérieur doit être modifiée selon l'invention pour y incorporer un enroulement et deux plots conducteurs connectés chacun à une extrémité de l'enroulement, l'enroulement et les plots conducteurs étant disposés sur le côté du support isolant opposé à celui qui porte l'enroulement d'antenne et la puce électronique 14. C'est ce côté opposé qui est destiné à être solidarisé à la paroi en matériau conducteur du produit à étiqueter par l'intermédiaire, par exemple, d'une couche adhésive isolante.

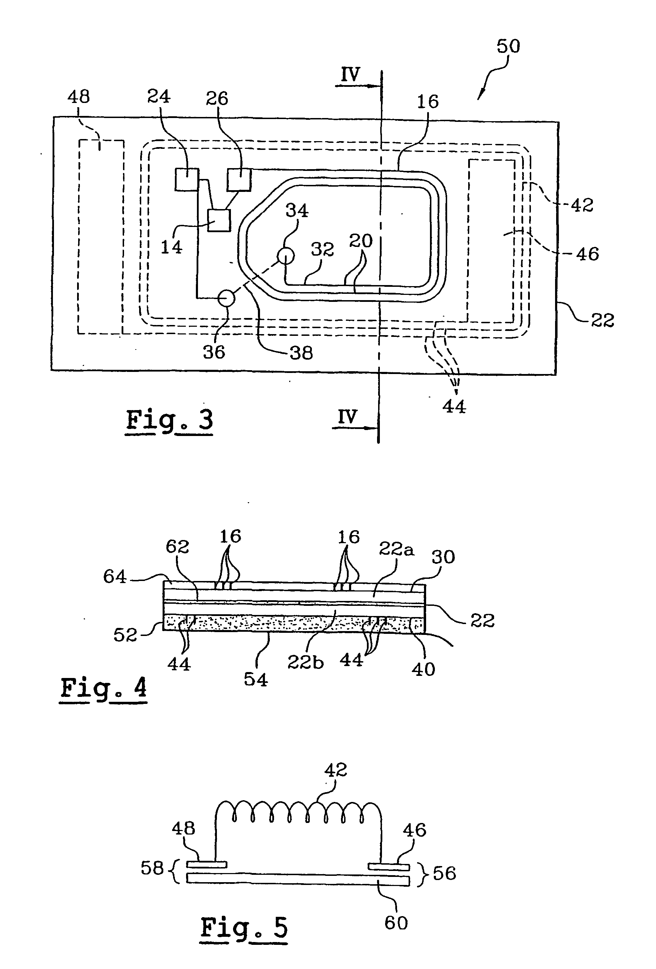

Plus précisément comme le montre les schémas des figures 3 et 4 dans lequel un support isolant 22, par exemple en polyéthylène, sert d'un côté 30 de support à un enroulement planaire 16 de spires conductrices 20.

Les extrémités 24 et 26 de l'enroulement 16 sont connectées aux bornes d'entrée de la puce électronique 14. L'extrémité 26 est l'extrémité externe de l'enroulement tandis que l'extrémité 24 est connectée à l'extrémité interne 32 par l'intermédiaire de plots conducteurs 34 et 36 traversant le support 22 et d'un pont conducteur 38 reliant les plots 34 et 36.

Le côté 40 du support 22, opposé au côté 30, sert de support à un enroulement planaire 42 de quelques spires conductrices 44. Les spires 44 entourent celles 20 de l'enroulement 16 mais cette disposition n'est pas nécessaire.

Chaque extrémité de l'enroulement 42 est connectée à un plot conducteur 46 ou 48 de grande surface situé l'un 46 à l'intérieur des spires 44 et l'autre 48 à l'extérieur des spires 44.

Le produit qui vient d'être décrit en relation avec les figures 3 et 4 constitue une étiquette électronique sans contact 50 selon l'invention. Une telle étiquette 50 est alors solidarisée à la paroi conductrice externe du produit à étiqueter par l'intermédiaire d'une couche de colle isolante 52.

De préférence, cette couche isolante adhésive 52 est disposée sur le côté 40 du support 22, puis protégée par une feuille de papier siliconé 54.

Cette feuille de papier siliconé 54 est détachée de l'étiquette 50 avant d'appliquer le côté 40, revêtue de la couche adhésive isolante 52, sur la paroi conductrice externe du produit à étiqueter.

Par suite de ce collage par l'intermédiaire d'une couche adhésive isolante 52, deux condensateurs 56 et 58 sont créés respectivement entre les plots conducteurs 46 et 48 et la paroi conductrice 60. Ces condensateurs 56 et 58 constituent avec l'enroulement 42 un circuit accordé 66 dont la fréquence d'accord est voisine de celle du circuit accordé 12 de l'antenne de la puce électronique 14 et comprenant l'enroulement 16.

A titre d'exemple, la fréquence d'accord du circuit accordé comprenant l'enroulement 16 est de 14 MHz environ tandis que celle du circuit accordé 66 comprenant l'enroulement 42 est de 16 MHz environ.

L'étiquette 50 selon l'invention utilise le même support isolant 22 pour supporter d'un côté 30 la puce 14 et l'antenne 16 et sur le côté opposé 40 un enroulement 42 et des plots conducteurs 46 et 48. Cependant, il est possible de fabriquer séparément d'une part, l'étiquette électronique classique sans contact sur le support isolant 22 et, d'autre part, l'enroulement 42 ainsi que les plots 46 et 48 sur un autre support isolant. Pour réaliser l'étiquette électronique selon l'invention, il suffit alors d'assembler les deux feuilles isolantes par leur face sans enroulement par l'intermédiaire d'une couche adhésive.

Sur le schéma de la figure 4, cela revient à scinder la feuille 22 en deux parties 22a et 22b suivant l'épaisseur et à intercaler une couche adhésive isolante 62 entre les deux parties scindées.

A titre indicatif, les spires 20,44 ont une épaisseur de 10 à 20 µm, le support isolant 22 a une épaisseur de 25 µm environ, la couche adhésive 52 a une épaisseur de 75 µm.

## Revendications

1. Etiquette électronique sans contact (50) destinée à être solidaire d'une surface conductrice (60), par l'intermédiaire d'une couche diélectrique isolante(52), ladite étiquette comprenant d'une part un support électriquement isolant (22) portant un circuit intégré (14) associé à un premier enroulement conducteur d'antenne (16) pour former un premier circuit accordé, et d'autre part un circuit (66) comprenant un deuxième enroulement conducteur (42) de spires ayant deux extrémités,
**caractérisée en ce que** le circuit (66) comporte deux armatures de grande surface (46,48) disposées aux extrémités du deuxième enroulement, lesdites armatures s'étendant sur le support sans se faire face, d'une largeur nettement supérieure à celle d'une extrémité d'enroulement de telle manière que chaque armature puisse coopérer avec ladite surface conductrice (60) pour former un condensateur accordant le circuit (66) à une fréquence d'accord.

2. Etiquette électronique sans contact selon la revendication 1, **caractérisée en ce que** ledit support isolant (22) comprend deux supports isolants (22a, 22b) comportant chacun un desdits premier et deuxième enroulements, les faces opposées des supports isolants étant solidarisées entre elles.

3. Etiquette électronique sans contact selon la revendication 2, **caractérisée en ce que** les faces opposées des deux supports isolants (22a, 22b) sont solidarisées entre elles par une couche adhésive isolante (62).

4. Etiquette électronique sans contact selon l'une des revendications 1 à 3, **caractérisée en ce que** la couche diélectrique isolante (52) est une couche adhésive.

5. Etiquette électronique sans contact selon la revendication 4, **caractérisée en ce que** ladite couche adhésive (52) est recouverte d'une feuille de protection détachable (54).

6. Etiquette électronique sans contact selon l'une des revendications 1 à 5, **caractérisée en ce que** le circuit accordé (12) comprenant le premier enroulement conducteur d'antenne (16) et le circuit accordé (66) comprenant le deuxième enroulement conducteur (42) ont des fréquences d'accord qui sont voisines.

## Claims

1. A contactless electronic label (50) intended to be attached to a conductive surface (60) by means of an insulating dielectric layer (52) in which the said label comprises, on the one hand, an electrically insulating support (22) that includes an integrated circuit (14) connected to a first conductive winding of the antenna (16) to form a first tuned circuit and, on the other hand, a circuit (66) that comprises a second conductive winding (42) with double-ended loops,
**characterised in that** the circuit (66) comprises two large armatures (46,48) placed on the ends of the second winding, in which the said armatures extend across the surface without facing each other, with a width that is clearly greater than that of the end of a winding in such a manner that each armature is able to work together with the said conductive surface (60) to form a capacitor that tunes the circuit (66) to a tuned frequency.

2. A contactless electronic label according to claim 1, **characterised in that** the said insulating support (22) comprises two insulating supports (22a, 22b) each of which comprises one of the said first and second windings, in which the opposing faces of the insulating supports are attached to each other.

3. A contactless electronic label according to claim 2, **characterised in that** the opposing faces of the two insulating supports (22a, 22b) are attached to each other by means of an insulating adhesive layer (62).

4. A contactless electronic label according to any of the claims 1 to 3, **characterised in that** the insulating dielectric layer (52) is an adhesive layer.

5. A contactless electronic label according to claim 4, **characterised in that** the said adhesive layer (52) is covered with a removable protective sheet (54).

6. A contactless electronic label according to any of the claims 1 to 5, **characterised in that** the tuned circuit (12) that comprises the first conductive winding of the antenna (16) and the tuned circuit (66) that comprises the second conductive winding (42) have similar tuning frequencies.

## Patentansprüche

1. Kontaktfreies elektronisches Etikett (50), das über eine dielektrische Isolierschicht (52) fest mit einer leitenden Fläche (60) verbunden werden soll, wobei das besagte Etikett einerseits einen elektrisch isolierenden Träger (22) mit einer integrierten Schaltung (14) aufweist, die mit einer ersten leitenden Antennenwicklung (16) verbunden ist, um einen ersten abgestimmten Kreis zu bilden, und andererseits einen Kreis (66) mit einer zweiten leitenden Windungswicklung (42) mit zwei Enden,
**dadurch gekennzeichnet, dass** die Schaltung (66) zwei großflächige, an den Enden der zweiten Wicklung angeordnete Beläge (46, 48) umfasst, die sich über den Träger erstrecken, ohne sich gegenüber zu liegen, und die weitaus breiter sind als ein Wicklungsende, so dass jeder Belag mit der besagten leitenden Fläche (60) zusammenwirken kann, um einen Kondensator zu bilden, der den Kreis (66) auf eine Abstimmfrequenz abstimmt.

2. Kontaktfreies elektronisches Etikett gemäß Anspruch 1,
**dadurch gekennzeichnet, dass** der besagte Isolierträger (22) aus zwei Isolierträgern (22a, 22b) besteht, die jeweils eine der besagten ersten oder zweiten Wicklungen aufweist, wobei die gegenüberliegenden Seiten der Isolierträger fest miteinander verbunden sind.

3. Kontaktfreies elektronisches Etikett gemäß Anspruch 2,
**dadurch gekennzeichnet, dass** die sich gegenüber liegenden Seiten der beiden Isolierträger (22a, 22b) anhand einer isolierenden Klebschicht (62) fest miteinander verbunden sind.

4. Kontaktfreies elektronisches Etikett gemäß einem der Ansprüche 1 bis 3,
**dadurch gekennzeichnet, dass** die dielektrische Isolierschicht (52) eine Klebschicht ist.

5. Kontaktfreies elektronisches Etikett gemäß Anspruch 4,
**dadurch gekennzeichnet, dass** die besagte Klebschicht (52) mit einer abziehbaren Schutzfolie (54) bedeckt ist.

6. Kontaktfreies elektronisches Etikett gemäß einem der Ansprüche 1 bis 5,
**dadurch gekennzeichnet, dass** der abgestimmte Kreis (12) mit der ersten leitenden Antennenwicklung (16) und der abgestimmte Kreis (66) mit der zweiten leitenden Wicklung (42) benachbarte Abstimmfrequenzen haben.
